# EUROPEAN PATENT APPLICATION

(11) **EP 4 575 609 A1**
(43) Date of publication of application: **25.06.2025**
(21) Application number: 23275179.2
(22) Date of filing: 21.12.2023
(51) Int. Cl.: G02B 27/01

(54) **LIGHT SECURITY FOR HEAD MOUNTED DISPLAYS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to an aspect of the present invention there is provided an optical train integrated into a head mounted display, the optical train comprising: a display source, a relay lens arrangement arranged to receive light emitted by the display source, an aperture at the output of the relay lens, wherein a first filter is positioned within the aperture to transmit light from one or more predetermined wavelength bands and reject light of wavelengths not within the one or more predetermined wavelength bands, a mirror arranged to receive light from the aperture, the mirror comprising a mirror coating arranged to reflect light from the predetermined one or more wavelength bands from a given angular incidence range, and a combiner element arranged to receive light from the mirror and direct light towards an eye of a user of the head mounted display, the combiner element comprising: an inner surface comprising a reflective combiner coating arranged to only reflect light from the predetermined one or more wavelength bands, and an outer surface, comprising an anti-reflective combiner coating arranged to minimise reflection of light towards the eye, wherein the inner surface is positioned closer to the eye relative to the outer surface.

## Description

### FIELD

The present invention relates to the assembly of an optical train integrated into a head mounted display.

### BACKGROUND

Head mounted displays (HMDs) are known as a means for displaying an augmented reality to a user. An augmented reality includes a real world image overlayed with a virtual image when presented to a user. Light security concerns the issue where light exits an HMD such that it is visible and comprehensible to people who are not using the HMD.

### SUMMARY

According to an aspect of the present invention, there is provided an optical train integrated into a head mounted display, the optical train comprising: a display source, a relay lens arrangement arranged to receive light emitted by the display source, an aperture at the output of the relay lens, wherein a first filter is positioned within the aperture to transmit light from one or more predetermined wavelength bands and reject light of wavelengths not within the one or more predetermined wavelength bands, a mirror arranged to receive light from the aperture, the mirror comprising a mirror coating arranged to reflect light from the predetermined one or more wavelength bands from a given angular incidence range, and a combiner element arranged to receive light from the mirror and direct light towards an eye of a user of the head mounted display, the combiner element comprising: an inner surface comprising a reflective combiner coating arranged to only reflect light from the predetermined one or more wavelength bands, and an outer surface, comprising an anti-reflective combiner coating arranged to minimise reflection of light towards the eye, wherein the inner surface is positioned closer to the eye relative to the outer surface.

In an aspect, the optical train further comprises: a second mirror located in the optical path between relay lens arrangement and the mirror.

In an aspect, wherein the second mirror is coated with a mirror coating arranged to reflect light from the predetermined one or more wavelength bands from a given angular incidence range.

In an aspect, wherein the coating of the first or second mirror is applied on a substrate arranged to absorb any light not reflected by the mirror coating.

In an aspect, wherein the substrate comprises an opaque glass or crystal incorporating a light absorbing material, and wherein the light absorbing material comprises carbon particles.

In an aspect, wherein the mirror coating is a dielectric coating stack.

In an aspect, wherein the first absorbing filter is a dye loaded substrate.

In an aspect, wherein the number of layers and/or thickness of the reflective combiner coating is less than the number of layers and/or thickness of the mirror coating and/or the first aperture filter.

In an aspect, wherein the anti-reflective combiner coating is arranged to transmit and refract light towards the ground when the head mounted display is in use.

In an aspect, wherein the anti-reflective combiner coating transmits non-collimated light.

In an aspect, wherein the display source comprises a second absorbing filter positioned at the output of the display source, wherein the second absorbing filter is arranged to transmit light from the one or more predetermined wavelength bands and absorb light of wavelengths not within the one or more predetermined wavelength bands.

In an aspect, wherein the display source is an emissive display.

In an aspect, wherein the relay lens arrangement is a prismatic relay lens comprising: a first prism and a second prism wherein light emitted from the display source enters the first prism via a first surface, is reflected off a second surface and a third surface before passing through the second surface into the second prism through a fourth surface, and light entering the second prism through the fourth surface is reflected off a fifth surface and the fourth surface before exiting the second prism through a sixth surface.

In an aspect, wherein the prismatic relay lens further comprises an aperture positioned between the first prism and the second prism, and wherein a size and shape of the aperture correlates to a size and shape of an exit pupil of the optical train.

According to an aspect of the present invention, there is provided a head mounted display comprising the optical train according to another aspect.

### BRIEF DESCRIPTION OF THE FIGURES

Embodiments of the invention will now be described by way of example only with reference to the figures, in which:
Figure 1 shows a schematic diagram of an example optical train with a single mirror for a head mounted display;
Figure 2 shows a schematic diagram of an example optical train with a single mirror for a head mounted display;
Figure 3 shows a schematic diagram of an aperture;
Figure 4 shows a schematic diagram of a coated mirror surface;
Figure 5 shows a schematic diagram of a coated combiner; and
Figure 6 shows a schematic diagram of a prismatic relay optic;

### DETAILED DESCRIPTION

Light security is becoming an important topic for augmented reality (AR) displays, as for some applications it can be important to a user that the content displayed on their AR display is not visible to others around them and/or that the display does not cast or project large quantities of light into the surrounding environment. It is commonplace in the industry (for AR displays and head mounted displays) to employ waveguide technology for guiding light into the eyes of the user, however these technologies have particular downfalls for security. Specifically, waveguides emit collimated light in multiple directions away from the user and it is easily possible to see the display that someone is wearing by looking at the output of their waveguide display making the system unsecure. Waveguides typically also illuminate a very large eyebox resulting in large patches of light being cast across a user's face, and they can glow significantly due to light scattering within the waveguide making the system non-discreet as the housing of the device is illuminated.

Reflective combiner based displays have benefits in that they can be optimised to avoid some of these issues but can still struggle with light cast away from the user during the final "combiner reflection" to the user's eye. Examples described herein aim to minimise light cast away from a user and ensure that the system is as "light secure" as possible, leveraging numerous benefits within the optical design to create a discreet and secure AR display.

Described herein is an optical train for a HMD that provides improved light security. From a high level, numerous optical elements in the optical train are modified to filter light as it passes through the optical train. The result is that light is filtered continuously to "clean up" the throughput without compromising the peak luminance of the display. If the emissive sources are chosen correctly and the optical coatings within the system are optimised correctly then high peak luminance can still be achieved at the user's eye, high transmission to the outside world with minimal colouration can be retained, the user's eyes remain visible, and the display is "light secure" to an external viewer. By precisely tuning the light as it passes through the optical train, the image reflected from a combiner/visor element towards the eye can be controlled to project light within a confined eye box such that only the user of the head mounted display can view the image. In addition, by filtering and/or removing particular wavelengths of light in the optical train, light exiting the optical train at intermediate points is minimised.

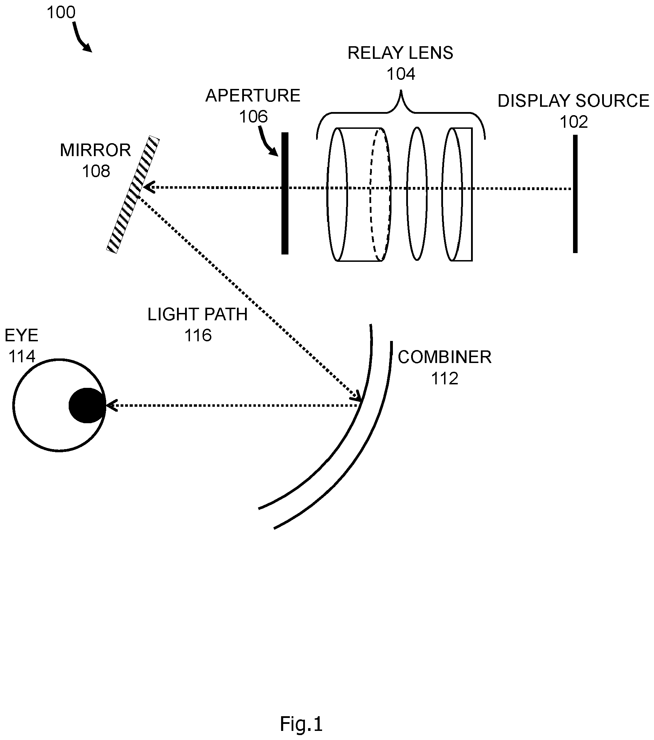

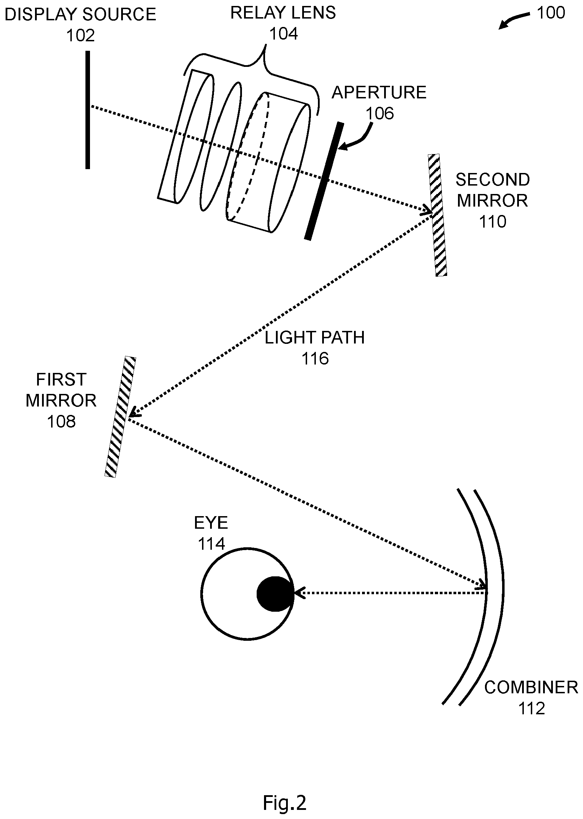

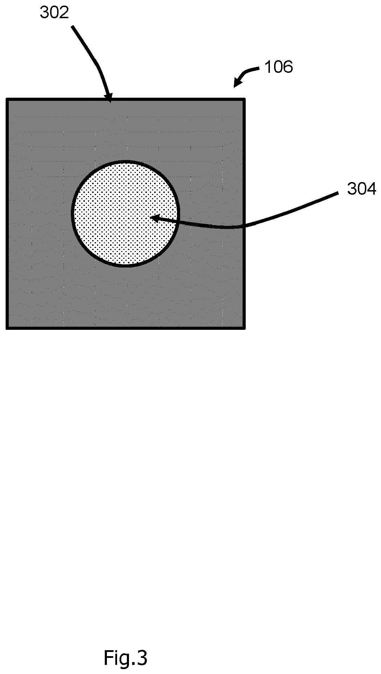

The optical train which is integrated into the head mounted display will be described first (Figures 1 and 2) followed description of how coatings and filters are applied to the optical elements (Figures 3-5).

Figure 1 shows a schematic diagram of an example optical train for a head mounted display. It will be appreciated that a head mounted display may comprise two independent optical trains, each one as shown in figure 1, with one optical train for each eye and with the two optical trains being complementary mirror-image arrangements such that a binocular display can be created. The optical train 100 comprises a display source 102, a relay lens arrangement 104, an aperture 106 positioned at the output of the relay lens 104, a first mirror 108, and a combiner 112. Figure 1 also shows the position of the wearer's eye 114. Figure 2 shows another case where a second mirror 110 is included in the optical train between the relay lens arrangement 104 and the first mirror 108. The second mirror serves to further fold the light path 116. It will be appreciated that more than two mirrors may also be incorporated into the optical train 100.

The display source 102 (also referred to as a light source) comprises one or more displays, each display comprising a plurality of self-emissive pixels (e.g. mLEDs, OLEDs, etc.). As described above, where the display source 102 comprises a plurality of displays, this may comprise three displays, one for each of the colours red, green and blue. The use of multiple displays (rather than a single display) may enable provision of a high luminance, full colour display.

The relay lens arrangement 104 may comprise a plurality of lenses (as shown in figure 1) or a single lens. These lenses may be made of any appropriate material (e.g. plastic or glass). The relay lens arrangement 104 is positioned on the optical path between the display source 102 and the first mirror 108 in the example of figure 1 and between the display source 102 and the second mirror 110 in the example of figure 1. The relay lens arrangement 104 directs the light output by the display source 102 towards the subsequent mirror and has a focal plane that is near or close to the front face of the first mirror 108 (in both the arrangements of figures 1 and 2). Any light that is output by the display source 102 but not transmitted by the relay lens arrangement 104 is mostly absorbed in the relay lens arrangement via the use of baffles and absorbent coatings, thus controlling stray light within this part of the optical train. An aperture 106 is positioned at the output of the relay lens 104 to control the throughput of light through the system and to help construct the size and shape of the exit pupil of the system appropriately.

The first mirror 108 serves to fold the optical path between the display source 102 and the combiner 112 in order that it is more compact. This results in a smaller, lighter and less bulky head worn display that is consequently more comfortable to wear. This is particularly important where the head worn display is worn for long periods of time and/or used in space-constrained environments (e.g. within an aircraft). The first mirror 108 includes at least one partially reflective surface (either the front or rear face of the mirror). In addition, the front face of the first mirror 108 may not be flat, but may instead be convex or concave in shape such that it has optical power (i.e. it has a focussing effect on the light incident upon its front face). Where the first mirror 108 has optical power it therefore assists in forming the image viewed by the wearer. The front face of the first mirror 108 may also be decentred and tilted relative to the optical axis of the system. Different combinations of power, tilt and decentring are used depending upon the required layout and/or configuration of the device. Arranging the first mirror 108 to be tilted can also help to compensate aberrations induced by the tilted combiner 110.

The combiner 112 receives light reflected by the first mirror 108 and redirects light towards the wearer's eye 114. The combiner may comprise a non-spherical surface form, tilted about at least a first axis (e.g. the X axis) and may also be decentred in the perpendicular axis (e.g. the Y axis), i.e. the central ray in the field of view does not strike the centre of the optical surface form. The combiner 112 is arranged to redirect one or more wavelengths toward the user to allow the user to view a virtual display created by the optical device simultaneously with the outside world (e.g. light rays that pass through the combiner 112 indicated by the dotted arrow in figure 1). The non-spherical shape is used to help compensate for off-axis aberrations.

In some cases, the combiner 112 is made of a polymer material. The result is an efficient and highly transmissive component which is very well suited for use in the augmented reality optical design. In most cases the combiner 112 has a transmissivity suitable to view an augmented reality view of symbology and the outside world.

It will be appreciated that a head worn display comprises a mechanical chassis (not shown in figure 1) which supports the elements shown in figure 1 or figure 2 and holds them in alignment with each other. For a binocular head worn display, the chassis supports two independent optical trains as shown in figure 1 or figure 2, one for each eye of the wearer, with one optical train being the complementary mirror image of the other.

As discussed previously, the numerous optical elements with the optical train shown in figures 1 and 2 are filtered and/or coated to provide precise control of the light as it passed through the optical train. This precise control results in image bearing light being reflected from the combiner 112 towards the user's eye that is restricted to a predetermined eye box. Figures 3-5 and the related discussions herein describe how optical elements are modified to achieve such precise control.

Figure 3 shows a schematic diagram of the aperture 106. An absorbing portion 302 is shown which does not allow transmission of light. A filter 304 is applied within the aperture 106 to reject certain wavelength bands and allow transmission of a predetermined wavelength band. In other cases, more than one predetermined wavelength band may be defined. The filtered wavelength bands are selected such that only the required spectra emitted by the display source is passed through the system. For example, if the purpose of the HMD is to present a monochrome green display to the user, a narrow green bandpass filter can be applied in the aperture, which restricts the display emission down to a given FWHM bandwidth. As the filter applied in the aperture is a transmissive element, in some cases, the filter may be an absorbing filter rather than reflective to minimise back scatter in the system. In one example, a dye loaded substrate is used which acts to absorb wavelengths outside of the band passed through the system. In another example, polymer or laminated filters can be used to reduce the mass of the filter 304.

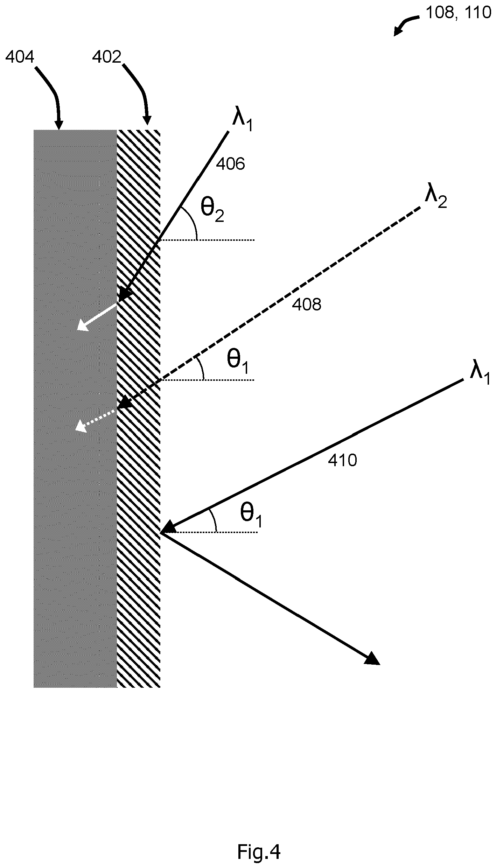

Figure 4 shows a schematic diagram of the surface of a mirror included in the optical train of a head mounted display. The mirror 108 comprises a coating 402 arranged to reflect light from one or more predetermined wavelength bands from a given angular incidence range. In some cases, the one or more predetermined wavelength bands are the same as the predetermined wavelength bands which are transmitted by the filter 304. In some cases, the coating 402 is also applied to the second mirror 110 illustrated in figure 2. Figure 4 shows three example light paths 406, 408 and 410 which are incident on the coating 402. In this example, the coating 402 in figure 4 is arranged such that light with a wavelength λ₁ at an angle of incidence of θ₁ is reflected. The light of path 406 is not reflected due to its angle of incidence (θ₂) and the light of path 408 is not reflected due to its wavelength (λ₂). The light of path 410 is reflected because it has the correct wavelength and is incident on the coating at the correct angle.

By applying the coating 402 on the mirror 108, light passing through the optical train can be precisely controlled such that the amount of redundant light present in the optical train is decreased. This provides a light security advantage because the light reflected from the combiner can be optimised to reflect only towards the eyebox of the system. The coating 402 enables the light arriving at the combiner to have predetermined characteristics that will reflect from the combiner in controllable fashion so light reflected or refracted towards any other region other than the eyebox is reduced (e.g. away from the user).

By also applying the coating to a second mirror 110 or, in other cases, more than two mirrors, the light can be filtered more than once in the optical train 100. As a result, more simple coatings can be applied to multiple mirrors because all of the desired filtering does not need to take place at one element but can instead be performed at multiple optical elements. The benefit of applying simple coatings to the mirrors is a reduction in manufacturing complexity as well as reducing the likelihood of errors in the manufacture of said coatings. The coating applied to the mirrors also works in tandem with the filter 304 applied within the aperture 106 so the image bearing light is progressively filtered as it passes through the optical train. For example, the mirror coating 402 and the filter 304 can be configured to not reflect or transmit light, respectively, with wavelengths outside of a common predetermined wavelength band.

In some cases, the mirror 108 is arranged such that light which isn't reflected by the coating 402 is absorbed by the mirror and thus removed from the optical train. Figure 4 shows an example of how this is achieved by applying the reflective coating 402 to an absorbing substrate 404. The light from paths 406 and 408, which is not reflected by the coating, is transmitted and absorbed into the absorbing substrate and thus removed from the optical train 100. This provides the additional benefit that redundant light is removed from the optical train which reduces the likelihood of light being visible by a non-user of the head mounted display (e.g. because the absorbing substrate does not result in any light leakage or scatter). In some cases, the absorbing substrate is an opaque glass (e.g. black glass) or crystal. In other cases, the absorbing substrate comprises an absorbing material which may be carbon particles integrated into the structure of the glass or crystal.

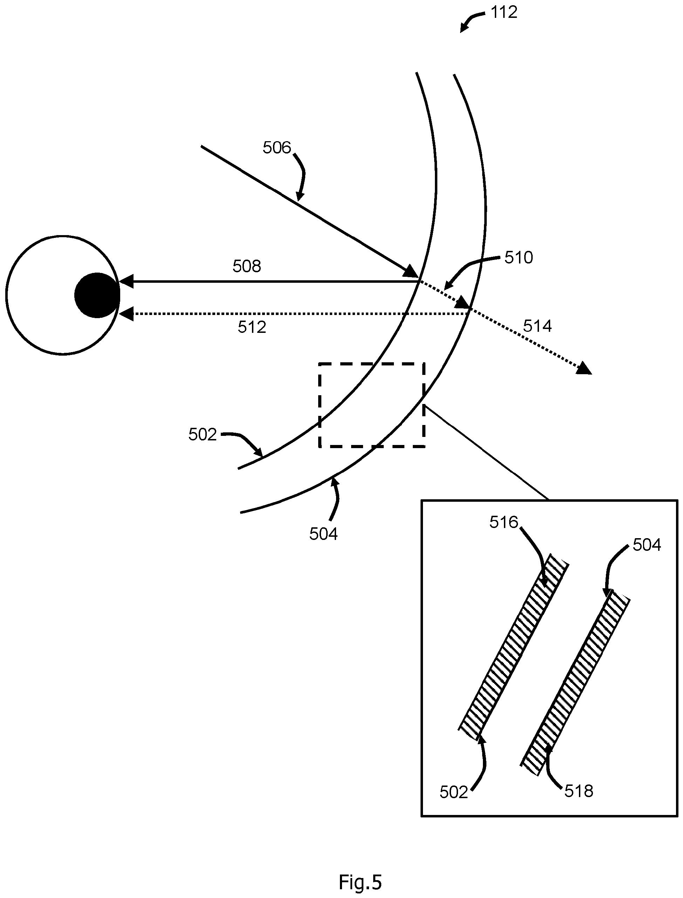

Figure 5 shows a schematic diagram of a combiner included in the optical train of a head mounted display. As discussed previously, the combiner is also referred to as a visor which is arranged as the final optical element that directs light towards the user's eye. Figure 5 also shows a zoomed in image (shown in the boxed portion) of combiner.

The combiner 112 comprises an inner surface 502, which is arranged on the side of the combiner that is closer to the user's eye 114. The inner surface 502 reflects light towards the user's eye. An outer surface 504 is located on the side of the combiner facing outward from the head mounted display.

A light path 506 is shown in Figure 5 which is incident on the inner surface 502 of the combiner 112. The primary purpose of the combiner is to reflect light towards the user's eye from the inner surface which is shown by the light path 508. However, in many cases, the light is not entirely reflected which results in light being transmitted 510 through the combiner 112 to the outer surface 504. This can occur because the coating applied to the inner surface of the combiner is not able to have a performance which is 100% reflective when considering all of the emitted wavelengths of the emissive display source, therefore when the light is incident upon the combiner a portion of this light is transmitted through the combiner to the outer surface.

When the transmitted light 510 hits the outer surface, it can be reflected back towards the user's eye as shown by light path 512. This can have numerous drawbacks due to light being reflected back towards the user, these include the potential for the user being able to see this light, which will present as a secondary image (i.e. a copy of the primary image but displaced in angle) and the potential for the light to be reflected to an area which is outside of the restricted eyebox. A secondary image can present misleading or distracting content to the user and it is desirable to mitigate these effects. Light being reflected outside of the restricted eyebox can result in an unintentional illumination of the user's face as well as compromising light security because the light may be seen by a non-user who may be able to see light directed outside of the restricted eyebox. To overcome these issues, the inner surface 502 is coated with a reflective combiner coating 516 and the outer surface 504 is coated with a anti-reflective combiner coating 518.

The reflective combiner coating 516 is arranged to reflect light with a wavelength of one or more predetermined wavelength bands from a given angular incidence range. In some cases, the reflective combiner coating 516 is a dielectric coating stack. By the time the light originating from the light source arrives at the inner surface 502 of the combiner it has undergone significant filtering via the coatings and filters applied throughout the optical train. The reflective combiner coating 516 can therefore be optimised to only reflect discrete and narrow wavelength bandwidths over a given angular incidence range as it has to do minimal filtering itself. As a result, the coating can be simplified compared to traditional implementations using fewer coating layers or materials to achieve the desired performance. For example, in the case of the optical train described above, the reflective combiner coating 516 may include fewer layers and/or be thinner than the coatings applied to the mirrors 108, 110 and the filter 304 applied in the aperture.

By minimising the number of layers and total thickness of the reflective combiner coating 516, the stability of the coating can be improved by reducing the stress between coating layers and the coating-to-substrate interface. This is highly beneficial to maximise coating adhesion and performance/longevity and minimise risk of delamination which is a common issue when using polymer optics. This is particularly advantageous when the head mounted displays are used in outdoor environments where the combiner 112 is exposed to adverse conditions.

In addition, because minimal filtering, or in some cases no filtering, is implemented by the reflective combiner coating 516, it can also be optimised purely for high reflection. As a result, the combiner/visor can be optimised to simultaneously have a minimal impact on the outside world view of the user and not impact the colouration of the user's view of the outside world.

The anti-reflective combiner coating 518 is an dielectric coating which enables light to be ejected light away from the user by minimising reflection. The light transmitted though the anti-reflective combiner coating 518, shown by light path 514 is not collimated meaning it is difficult to resolve image content even if the light is visible by a non-user of the head mounted display thus improving light security. Additionally, the anti-reflective combiner coating 518 helps ensure that the user's eyes remain highly visible through the combiner which is a desirable quality for AR systems.

Light transmitted through the inner surface 502 may also transmit through the outer surface as shown by light path 514. This may result in the head mounted display being made visible to non-users of the head mounted display. This may also result in a compromise to light security with light unintentionally escaping the optical train in a different direction to the restricted eyebox (i.e., away from the user). To overcome this issue, the light can be refracted towards the ground when the head mounted display is in use (i.e., when it is being worn). The refracting of transmitted light 514 towards the ground may also be achieved by tilting the combiner 112.

In summary (referring back to figures 1 and 2), the aperture 106, the mirror 108, (optionally) the second mirror 110 and the inner 502 and outer 504 surfaces of the combiner 112 all contribute to the filtering of the light as it passes through the optical train with the use of coatings and filters. The result of the continuous and collective filtering is when it is reflected off the inner surface 502 of the combiner 112, the light is confined to a restricted eye box which reduces the transmission of light outside of the user's eye thus improving light security. In addition, because the filtering of the light is not performed at one stage but instead is performed gradually through the optical train, more simple coatings or filters can be used which reduce manufacturing complexity and improve longevity of the optical elements, and the total amount of filtering can yield more reliable and precise results rather than relying on a single element as a filter.

Whilst not shown in figures 1 and 2, the optical train may comprise an additional filter (e.g. similar to the filter 304 shown in figure 3 and described above). This second filter may, for example, be positioned in the optical path at the output of the display source 102 (i.e. between the display source 102 and the relay lens arrangement 104), for example on the cover glass of the display source.

In a further variation of the arrangements described above, one or more of the lenses in the relay lens arrangement 104 may have a filter coating applied onto its surface.

In some cases, the coatings and filters applied throughout the optical train may be arranged such that they all reflect or transmit light from a common predetermined wavelength band. This ensures that the refraction and reflection of the light through the light train can be precisely controlled right up until delivery to the restricted eye box. To improve the light security further, one or more of the display source 102 and/or elements in the relay lens 104 may also be coated/filtered to remove unwanted wavelengths of light from the optical train 100.

In the examples described above, coatings are applied to the mirrors. In other examples, one or more of these coated mirrors may be replaced by holographic optical elements which perform the same optical function but using a different optical technique.

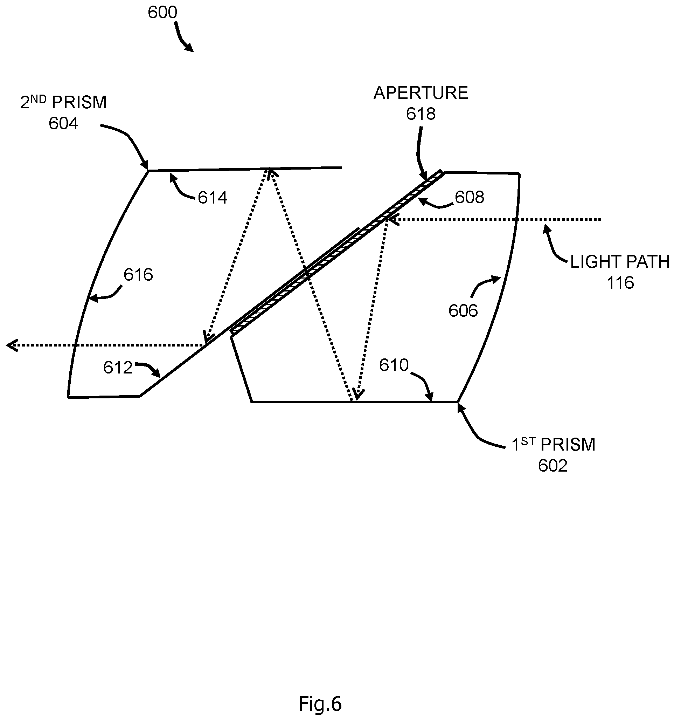

In a modified version of the optical train, the relay lens arrangement 104 is replaced with a prismatic relay optic 600. Figure 6 shows a detailed schematic of the prismatic relay optic 600. The first and second prisms 602, 604 both comprise three surfaces which are shaped to have optical power: the first, second and third surfaces 606, 608, 640 which are surfaces of the first prism 602, and fourth, fifth and sixth surfaces 612, 614, 616 which are surfaces of the second prism 604. For example, the surfaces of the first and second prisms may have a surface form defined by at least one of: a spherical surface definition, an aspheric surface definition, a biconical surface definition, or a high order polynomial definition. The first and second prisms may have substantially triangular cross-sections including the three optically powered surfaces.

The light 116 (as emitted by the display source 102) enters the first prism 602 through the first surface 606 and is incident upon the second surface 608 of the first prism 610. The second surface 608 is arranged to reflect light received from the first surface 606 by total internal reflection towards the third surface 610 of the first prism (e.g., as a consequence of its angle). The third surface 610 is arranged to reflect light received from the second surface 608 back to the second surface 608. Due to the angle of incidence, the light reflected from the third surface 610 and incident upon the second surface 608 is not further reflected but is output through the second surface 608 towards the second prism 604 (e.g. through the optional aperture 618). The second surface 608 is therefore arranged to reflect light received from a first range of angles, and transmit light received from a second range of angles where the first range of angles and second range of angles do not overlap.

Light enters the second prism 604 through the fourth surface 612 and reflects off a fifth surface 614 which is arranged to reflect light back towards the fourth surface 612. The fourth surface 612 is further arranged to reflect light by total internal reflection towards the sixth surface 616. The fourth surface 612 is therefore arranged to reflect light received from a third range of angles, and transmit light received from a fourth range of angles where the third range of angles and fourth range of angles do not overlap. The sixth surface 616 is arranged to transmit light received from the fourth surface 612 towards the next optical element in the optical train. For example, the next optical element is the first mirror 108 shown in Figure 2.

As total internal reflection is used to reflect the light incident upon the second surface 608 and fourth surface 612, this avoids the need for a coating to be applied to this surface and so reduces the complexity of the optical train. It also enables the same surface (and the same part of the surface) to both transmit and reflect light (including light of the same wavelength) which would not be possible if a simple reflective coating was instead applied to the surface.

Figure 6 also shows an optional aperture 618. In some cases, the optional aperture 618 replaces the filtered aperture 106. In other case, the optional aperture 618 is used included in the optical train with the filtered aperture 106. The aperture 618 is positioned at the interface between the second surface 608 and a fourth surface 612. The aperture 618 is used to construct the size and shape of the exit pupil of the system at the position of the wearer's eye 114. The size and shape of the aperture 618 therefore directly correlates to the size and shape of the exit pupil provided to the eye 114 of the user. Integrating the aperture 618 into the prismatic relay optic 600, instead of placing it elsewhere in the optical train (e.g. after the relay lens as shown in Figure 2) means the number of components included in the optical train is reduced whilst enabling the throughput of light through the optical train to be controlled. Including the aperture in this way also simplifies the overall assembly. The aperture may be integrated into the second surface 608, the fourth surface 612 or suspended between the first prism 602 and the second prism 604.

The first and second prisms may be separated by an air gap to help facilitate total internal reflection and in such examples, the air gap is between the second surface 608 and fourth surface 612. The thickness of the air gap (i.e. the perpendicular distance between the second surface 608 and fourth surface 612) may be less than 1 mm or it may be within a range of 0.25 mm to 0.5 mm. The thickness of the air gap may also be related to the overall size of the device with a smaller device having a smaller air gap. The thickness of the air gap may, in some examples, be dictated by the width of an aperture positioned in between the first and second prisms. The third surface 610 and the fifth surface 614 may be coated with a reflective coating that performs the same function as the mirror coating 402 (i.e., reflecting light from the predetermined wavelength band(s) from a given angular incidence range). The coated third 610 and fifth 614 surfaces may also comprise the absorbing substrate onto which the mirror coating 402 is applied.

The prismatic relay assembly 600 facilitates folding and shortening of the light path which means the number of components of the optical train can be minimised due to optical folding (and additional filtering with the use of coatings within the prismatic relay assembly 600) taking place within each prism. Minimising the number of components allows the optical train to be more compact thus reducing the size and weight of the HMD into which the optical train is integrated.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

## Claims

1. An optical train (100) integrated into a head mounted display, the optical train comprising:
a display source (102);
a relay lens arrangement (104) arranged to receive light emitted by the display source (102);
an aperture (106) at the output of the relay lens, wherein a first filter (204) is positioned within the aperture to transmit light from one or more predetermined wavelength bands and reject light of wavelengths not within the one or more predetermined wavelength bands;
a mirror (108) arranged to receive light from the aperture (106), the mirror comprising a mirror coating (302) arranged to reflect light from the predetermined one or more wavelength bands from a given angular incidence range; and
a combiner element (112) arranged to receive light from the mirror (108) and direct light towards an eye (114) of a user of the head mounted display, the combiner element comprising:
an inner surface (402) comprising a reflective combiner coating (406) arranged to only reflect light from the predetermined one or more wavelength bands; and
an outer surface (404), comprising an anti-reflective combiner coating (408) arranged to minimise reflection of light towards the eye, wherein the inner surface (402) is positioned closer to the eye (114) relative to the outer surface (404).

2. The optical train according to claim 1, further comprising:
a second mirror (110) located in the optical path between relay lens arrangement (104) and the mirror (108).

3. The optical train according to claim 2, wherein the second mirror is coated with a mirror coating (302) arranged to reflect light from the predetermined one or more wavelength bands from a given angular incidence range.

4. The optical train according to any preceding claim, wherein the coating of the first or second mirror is applied on a substrate arranged to absorb any light not reflected by the mirror coating.

5. The optical train according to claim 4, wherein the substrate comprises an opaque glass or crystal incorporating a light absorbing material; and wherein the light absorbing material comprises carbon particles.

6. The optical train according to any preceding claim, wherein the mirror coating is a dielectric coating stack.

7. The optical train according to any preceding claim, wherein the first absorbing filter is a dye loaded substrate.

8. The optical train according to any preceding claim, wherein the number of layers and/or thickness of the reflective combiner coating is less than the number of layers and/or thickness of the mirror coating and/or the first aperture filter.

9. The optical train according to any preceding claim, wherein the anti-reflective combiner coating is arranged to transmit and refract light towards the ground when the head mounted display is in use.

10. The optical train according to any preceding claim, wherein the anti-reflective combiner coating transmits non-collimated light.

11. The optical train according to any preceding claim, wherein the display source comprises a second absorbing filter positioned at the output of the display source, wherein the second absorbing filter is arranged to transmit light from the one or more predetermined wavelength bands and absorb light of wavelengths not within the one or more predetermined wavelength bands.

12. The optical train according to any preceding claim, wherein the display source is an emissive display.

13. The optical train according to any preceding claim, wherein the relay lens arrangement is a prismatic relay lens comprising: a first prism and a second prism wherein light emitted from the display source enters the first prism via a first surface, is reflected off a second surface and a third surface before passing through the second surface into the second prism through a fourth surface, and light entering the second prism through the fourth surface is reflected off a fifth surface and the fourth surface before exiting the second prism through a sixth surface.

14. The optical train according to claim 13, wherein the prismatic relay lens further comprises an aperture positioned between the first prism and the second prism, and wherein a size and shape of the aperture correlates to a size and shape of an exit pupil of the optical train.

15. A head mounted display comprising the optical train according to any of the preceding claims.
